# EUROPÄISCHE PATENTSCHRIFT

(11) **EP 1 069 551 B1**
(45) Veröffentlichungstag und Bekanntmachung des Hinweises auf die Patenterteilung: **26.04.2006**
(21) Anmeldenummer: 00112121.9
(22) Anmeldetag: 06.06.2000
(51) Int. Cl.: G10L 15/06

(54) **Spracherkennungssystem und Verfahren zur Spracherkennung vorgegebener Sprachmuster insbesondere zur Sprachsteuerung**
Speech recognition system and method for recognising given speech patterns, specially for voice control
Système de reconnaissance de la parole et procédé de reconnaissance des formes déterminées de parole, en particulier pour commande vocale

(30) Priorität: 16.07.1999 DE 19933323
(43) Veröffentlichungstag der Anmeldung: 17.01.2001
(73) Patentinhaber: Bayerische Motoren Werke Aktiengesellschaft, 80809 München (DE)
(72) Erfinder: Weinmann, Ulrich, Dr., 85386 Eching (DE); Peters, Mike, 85356 Freising (DE)

(56) Entgegenhaltungen:
- WO-A-99/40570
- US-A- 4 618 984
- US-A- 5 774 841
- KOSAKA T.; SAGAYAMA S.: 'Tree-structured speaker clustering for fast speaker adaptation' PROCEEDINGS OF THE CONFERENCE ON ACOUSTICS, SPEECH, AND SIGNAL PROCESSING, 1994, ADELAIDE, SA, AUSTRALIA 19 April 1994, NEW YORK, NY, USA, IEEE, Seiten I-245 - I-248

## Beschreibung

Die Erfindung bezieht sich auf ein Spracherkennungssystem und ein Verfahren zur Spracherkennung vorgegebener Sprachmuster, insbesondere zur Sprachsteuerung von Kraftfahrzeugsystemen, nach dem Oberbegriff des Patentanspruchs 1 bzw. 4.

Ein derartiges Spracherkennungssystem ist beispielsweise aus der US 5,774,841 bekannt. Hierbei werden Unsicherheitssituationen bei der Spracherkennung nur unzureichend behandelt.

Zur Sprachsteuerung von Kraftfahrzeugfunktionen, beispielsweise von Navigationssystemen und Autotelefonen, sind bereits Spracherkennungssysteme im Einsatz. Bei diesen Spracherkennungssystemen wird eine mit einer Aufnahmevorrichtung, z. B. mit einem Freisprechmikrofon, erfaßte Sprachäußerung mit vorgegebenen Sprachmustern verglichen. Derartige Sprachmuster sind, am Beispiel eines Autotelefons erläutert, Kommandos wie "Telefonnummer wählen", "Name speichern", "Korrektur", "Telefonbuch löschen" sowie einzelne Zahlen. Dabei gilt das vorgegebene Sprachmuster, das der erfaßten Sprachäußerung am ähnlichsten ist, als erkannt. Zur Ermittlung der Ähnlichkeit sind Spracherkenner, z. B. HMM-Erkenner, bekannt, die eine Sprachäußerung erfassen und Wahrscheinlichkeit ermitteln, mit der eine erfaßte Sprachäußerung mit den vorgegebenen Sprachmustern übereinstimmen. Das vorgegebene Sprachmuster mit der höchsten Wahrscheinlichkeit wird ausgewählt. Zur näheren Erläuterung der Funktionsweise von HMM-Erkennern wird beispielsweise auf die EP 0 559 349 A1 hingewiesen.

Kann eine Sprachäußerung überhaupt nicht zugeordnet werden, weil beispielsweise für zwei Sprachmuster dieselbe Wahrscheinlichkeit ermittelt wurde, wird die Sprachäußerung bzw. das Kommando abgewiesen oder das Spracherkennungssystem fragt im Dialog mit dem Nutzer nach ("wie bitte?"). Da diese Spracherkenner stark von der Aussprache des Nutzers abhängen (Dialekt, Soziolekt, Akzent usw.) kann es bei stark exponierter Sprechweise hinsichtlich der Trainingspopulation zu häufigen Abweisungen der Erkennung kommen. Dies führt zur Verringerung der Kundenakzeptanz von derartigen Sprachsteuerungen, die gerade für Kraftfahrzeugfunktionen in Zukunft erweitert werden sollen (z. B. Heiz-/Klimasteuerung, Radio-/CD-Steuerung, Blinkersteuerung, Lichtsteuerung usw.).

Es ist Aufgabe der Erfindung, ein Spracherkennungssystem und ein Verfahren zur Spracherkennung eingangs genannter Art derart zu verbessern, daß eine größere Unabhängigkeit von der Sprechweise erreicht wird.

Diese Aufgabe wird durch die Merkmale des Patentanspruchs 1 bzw. 4 verfahrensmäßig bzw. vorrichtungsmäßig gelöst.
Vorteilhafte Weiterbildungen der Erfindung sind die Gegenstände der abhängigen Patentansprüche.

Erfindungsgemäß wird bei einem Verfahren zur Spracherkennung vorgegebener Sprachmuster, insbesondere zur Sprachsteuerung von Kraftfahrzeugsystemen, bei dem in einem Spracherkennungssystem eine mit einer Aufnahmevorrichtung erfaßte Sprachäußerung mit den vorgegebenen Sprachmustern verglichen wird und bei dem das vorgegebene Sprachmuster, das der erfaßten Sprachäußerung am ähnlichsten ist, als erkanntes Sprachmuster gilt und ausgewählt wird, bei Auftreten einer definierten Unsi cherheitssituation im Hinblick auf die Spracherkennung vom Spracherkennungssystem eine automatische Nachtrainingsroutine ermöglicht.

Eine definierte Unsicherheitssituation kann ein definierter Unsicherheitswert sein. Z. B. liegt ein Unsicherheitswert vor, wenn eine maximale Wahrscheinlichkeit, mit der ein vorgegebenes Sprachmuster erkannt wurde, unterhalb einer vorgegebenen Schwelle liegt. Auch kann eine Unsicherheitssituation vorliegen, wenn mindestens zwei vorgegebene Sprachmuster mit gleichen oder sehr ähnlichen Wahrscheinlichkeiten (Nachbarn) erkannt werden und somit eine Auswahl nicht möglich ist. Ebenso liegt eine Unsicherheitssituation vor, wenn die erfaßte Sprachäußerung mehrmals abgewiesen wird bzw. wenn zu einer erfaßten Sprachäußerung mehrmals Nachfragen vom Spracherkennungssystem ausgegeben werden.

Die Bedienperson bzw. der Nutzer des Spracherkennungssystems kann die Nachtrainingsroutine vorzugsweise annehmen oder ablehnen. Wird sie angenommen, wird zur Durchführung der Nachtrainingsroutine im ersten Schritt ein nachzutrainierendes vorgegebenes Sprachmusters manuell von der Bedienperson oder automatisch vom Spracherkennungssystem ausgewählt. Im zweiten Schritt wird die daraufhin folgende Sprachäußerung erfaßt. Im dritten Schritt wird diese erfaßte Sprachäußerung dem ausgewählten vorgegebenen Sprachmuster zugeordnet und als neues Sprachmuster im Spracherkennungssystem hinterlegt.

In einer ersten Alternative wird bei erneutem Auftreten einer definierten Unsicherheitssituation für eine aktuell erfaßte Sprachäußerung bei einem Vergleich zunächst nur mit den vorgegebenen Sprachmustern anschließend die aktuell erfaßte Sprachäußerung mit dem in der Nachtrainingsroutine neu hinterlegten Sprachmuster verglichen und bei ausreichender Ähnlichkeit ausgewählt.

Somit wird das Spracherkennungssystem grundsätzlich nicht verändert. Aber beispielsweise der Hauptnutzer kann Sprachäußerungen, die oft abgewiesen werden, nachtrainieren.

In einer zweiten Alternative werden die in den Nachtrainingsroutinen neu hinterlegten Sprachmuster zusammen mit den vorgegebenen Sprachmustern bei einem Vergleich mit einer aktuell erfaßten Sprachäußerung sofort herangezogen, ohne eine definierte Unsicherheitssituation bei einem ersten Vergleich nur mit den vorgegebenen Sprachmustern abzuwarten.
Dabei wird zwar das Spracherkennungssystem verändert, jedoch können in diesem Fall alle Nutzer nachtrainieren.

Die Nachtrainingsroutinen können beliebig oft durchgeführt werden. Entweder können die in den Nachtrainingsroutinen erfaßten Sprachäußerungen alle als Sprachmuster für den Vergleich hinterlegt werden oder nur die zuletzt einem bestimmten vorgegebenen Sprachmuster zugeordnete Sprachäußerung wird als neu erfaßtes Sprachmuster für den Vergleich hinterlegt.

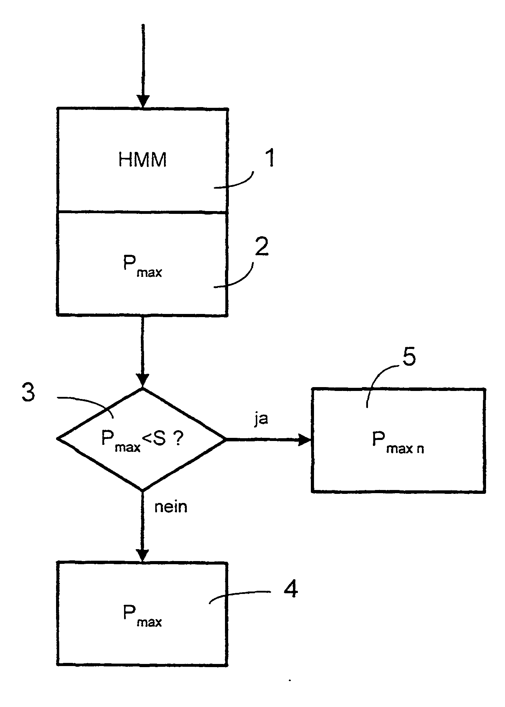

In der Zeichnung ist ein Ausführungsbeispiel der Erfindung dargestellt. Sie zeigt einen groben Funktionsablauf innerhalb eines Spracherkennungssystems nach einer bevorzugten Verfahrensalternative.

In einem hier nicht dargestellten mikroprozessorgesteuerten Spracherkennungssystem mit Mikrofon wird zunächst eine Sprachäußerung erfaßt und an einen HMM-Spracherkenner 1 weitergeleitet. Im HMM-Spracherkenner 1 sind ebenfalls die vorgegebenen Sprachmuster, z. B. die möglichen Kommandos eines sprachgesteuerten Autotelefons, abgespeichert. Die vorgegebenen Sprachmuster werden mit der erfaßten Sprachäußerung verglichen. Im Wahrscheinlichkeits-Berechnungsblock 2 werden die Wahrscheinlichkeiten P ermittelt, mit der die erfaßte Sprachäußerung mit jedem vorgegebenen Sprachmuster übereinstimmt. Das Sprachmuster mit der größten Wahrscheinlichkeit Pₘₐₓ für eine Übereinstimmung wird ausgewählt und an den Entscheidungsblock 3 weitergeleitet. Im Entscheidungsblock 3 wird abgefragt, ob die größte Wahrscheinlichkeit Pₘₐₓ kleiner als eine vorgegebene Schwelle ist. Dabei kann eine absolute Schwelle angegeben werden oder eine relative Schwelle, die den Wahrscheinlichkeitsabstand zu dem nächstwahrscheinlicheren Sprachmuster definiert. Ist die maximale Wahrscheinlichkeit Pₘₐₓ größer als die vorgegebene Schwelle, wird im Auswahlblock 4 das dieser Wahrscheinlichkeit zugeordnete vorgegebene Sprachmuster ausgewählt und -wenn es ein Kommando ist- durchgeführt. Ist die maximale Wahrscheinlichkeit kleiner als die vorgegebene Schwelle, wodurch eine Unsicherheitssituation vorliegt, wird zum Nachtrainingsroutineblock 5 übergegangen. Liegt im Nachtrainingsroutineblock 5 noch kein nachtrainiertes neu hinterlegtes Sprachmuster vor, wird der Nutzer gefragt, ob er die Nachtrainingsroutine durchführen will. Bejaht dieser, beginnt die Durchführung der Nachtrainingsroutine. Dabei wird im ersten Schritt ein nachzutrainierendes vorgegebenes Sprachmusters beispielsweise manuell von der Bedienperson, z. B. über die nicht-sprachgesteuerten Bedienelemente, oder automatisch auflistend, beginnend mit dem Sprachmuster mit der größten Wahrscheinlichkeit, vom Spracherkennungssystem ausgewählt. Im zweiten Schritt wird die daraufhin folgende Sprachäußerung erfaßt, Im dritten Schritt wird diese erfaßte Sprachäußerung dem ausgewählten vorgegebenen Sprachmuster zugeordnet und als neues Sprachmuster im Nachtrainingsroutineblock 5 des Spracherkennungssystems hinterlegt.

Liegt im Nachtrainingsroutineblock 5 schon ein nachtrainiertes neu hinterlegtes Sprachmuster vor, wird die erfaßte Sprachäußerung mit diesem Sprachmuster verglichen und bei großer Wahrscheinlichkeit (z. B. auch P>S) bzw. bei großer Ähnlichkeit ausgewählt. Anderenfalls beginnt erneut eine Nachtrainingsroutine.

Bei diesem Ausführungsbeispiel wird also nur dann ein Vergleich mit einem neu hinterlegten Sprachmuster vorgenommen, wenn die Wahrscheinlichkeit für ein ursprünglich vorgegebenes Sprachmuster zu gering ist oder wenn zwei Wahrscheinlichkeiten eine zu kleine Distanz haben.

## Patentansprüche

1. Verfahren zur Spracherkennung vorgegebener Sprachmuster zur Sprachsteuerung von Kraftfahrzeugsystemen, bei dem in einem Spracherkennungssystem eine mit einer Aufnahmevorrichtung erfaßte Sprachäußerung mit den vorgegebenen Sprachmustern verglichen wird, für die Übereinstimmung eine Wahuscheinlichkeit ermittelt wird und bei dem das vorgegebene Sprachmuster, das mit der erfaßten Sprachäußerung mit der größten Wahrscheinlichkeit übereinstimmt, als erkanntes Sprachmuster ausgewählt wird, wobei bei Auftreten einer definierten Unsicherheitssituation im Hinblick auf die Spracherkennung vom Spracherkennungssystem eine automatische Nachtrainingsroutine ermöglicht wird und wobei im Falle einer Durchführung der Nachtrainingsroutine im ersten Schritt ein nachzutrainierendes vorgegebenes Sprachmuster ausgewählt wird, im zweiten Schritt die daraufhin folgende Sprachäußerung erfaßt wird und im dritten Schritt diese erfaßte Sprachäußerung dem ausgewählten vorgegebenen Sprachmuster zugeordnet wird und als neues Sprachmuster im Spracherkennungssystem hinterlegt wird, **dadurch gekennzeichnet, dass** im Falle einer Durchführung der Nachtrainingsroutine im ersten Schritt das nachzutrainierende vorgegebene Sprachmuster automatisch auflistend, beginnend mit dem Sprachmuster mit der größten Wahrscheinlichkeit, vom Spracherkennungssystem ausgewählt wird.

2. Verfahren nach Patentanspruch 1, **dadurch gekennzeichnet, daß** bei erneutem Auftreten einer definierten Unsicherheitssituation für eine aktuell erfaßte Sprachäußerung bei einem Vergleich zunächst nur mit den vorgegebenen Sprachmustern anschließend die aktuell erfaßte Sprachäußerung mit dem in der Nachtrainingsroutine neu hinterlegten Sprachmuster verglichen und bei ausreichender Ähnlichkeit ausgewählt wird.

3. Verfahren nach Patentanspruch 1, **dadurch gekennzeichnet, daß** die in den Nachtrainingsroutinen neu hinterlegten Sprachmuster zusammen mit den vorgegebenen Sprachmustern bei einem Vergleich mit einer aktuell erfaßten Sprachäußerung sofort herangezogen werden, ohne eine definierte Unsicherheitssituation bei einem ersten Vergleich nur mit den vorgegebenen Sprachmustern abzuwarten.

4. Spracherkennungssystem zur Spracherkennung vorgegebener Sprachmuster zur Sprachsteuerung von Kraftfahrzeugsystemen, bei dem Mittel vorgesehen sind, die eine mit einer Aufnahmevorrichtung erfaßte Sprachäußerung mit den vorgegebenen Sprachmustern vergleichen, die für die Übereinstimmung eine Wahrscheinlichkeit ermitteln und die das vorgegebene Sprachmuster das der erfaßten Sprachäußerung mit der größten Wahrscheinlichkeit übereinstimmt, als erkanntes Sprachmuster auswählen, wobei Mittel vorgesehen sind, die bei Auftreten einer definierten Unsicherheitssituation im Hinblick auf die Spracherkennung eine automatische Nachtrainingsroutine ermöglichen und wobei Mittel vorgesehen sind, die im Falle einer Durchführung der Nachtrainingsroutine im ersten Schritt ein nachzutrainierendes vorgegebenes Sprachmuster auswählen, im zweiten Schritt die daraufhin folgende Sprachäußerung erfassen und im dritten Schritt diese erfaßte Sprachäußerung dem ausgewählten vorgegebenen Sprachmuster zuordnen und als neues Sprachmuster im Spracherkennungssystem hinterlegen, **dadurch gekennzeichnet, dass** die vorgesehenen Mittel auch derart ausgestaltet sind, dass im Falle einer Durchführung der Nachtrainingsroutine im ersten Schritt das nachzutrainierende vorgegebene Sprachmuster automatisch auflistend, beginnend mit dem Sprachmuster mit der größten Wahrscheinlichkeit, vom Spracherkennungssystem ausgewählt wird.

5. Spracherkennungssystem nach Patentanspruch 4, **dadurch gekennzeichnet, daß** Mittel vorgesehen sind, die bei erneutem Auftreten einer definierten Unsicherheitssituation für eine aktuell erfaßte Sprachäußerung bei einem Vergleich zunächst nur mit den vorgegebenen Sprachmustern anschließend die aktuell erfaßte Sprachäußerung mit dem in der Nachtrainingsroutine neu hinterlegten Sprachmuster vergleichen und bei ausreichender Ähnlichkeit auswählen.

6. Spracherkennungssystem nach Patentanspruch 4, **dadurch gekennzeichnet, daß** Mittel vorgesehen sind, die die in den Nachtrainingsroutinen neu hinterlegten Sprachmuster zusammen mit den vorgegebenen Sprachmustern bei einem Vergleich mit einer aktuell erfaßten Sprachäußerung sofort heranziehen, ohne eine definierte Unsicherheitssituation bei einem ersten Vergleich nur mit den vorgegebenen Sprachmustern abzuwarten.

## Claims

1. A method of voice recognition of given voice patterns for voice control of vehicle systems, wherein in a voice recognition system a voice utterance detected by a receiver is compared with the given voice patterns, the probability of agreement therewith is detected, and the given voice pattern which coincides with the highest probability with the detected voice utterance is selected as the recognised voice pattern, wherein in the event of a defined uncertainty situation regarding the voice recognition the voice recognition system enables an automatic retraining routine and wherein in the first step of the retraining routine a given voice pattern is selected for retraining, in the second step the immediately following voice utterance is detected and in the third step the detected voice utterance is associated with the selected given voice pattern and filed as a new voice pattern in the voice recognition system, **characterised in that** in the first step of a retraining routine the given voice pattern for retraining is selected by the voice recognition system by automatic listing, beginning with the voice pattern having the highest probability.

2. A method according to claim 1, **characterised in that** if another defined uncertainty situation arises with regard to a currently detected voice utterance, an initial comparison is made with the given voice patterns only, after which the currently detected voice utterance is compared with the voice pattern newly filed in the retraining routine and is selected if sufficiently similar.

3. A method according to claim 1, **characterised in that** the voice patterns newly filed in the retraining routines, together with the given voice patterns, are used immediately for comparing with a currently detected voice utterance without waiting for a defined uncertainty situation after a first comparison with the given voice patterns only.

4. A voice recognition system for recognition of given voice patterns for voice control of vehicle systems, wherein means are provided which compare a voice utterance detected by a receiver with the given voice patterns, which determine a probability of agreement and select that given voice pattern which coincides with the highest probability with the detected voice utterance as the recognised voice pattern, wherein means are provided which enable an automatic retraining routine in the event of a defined uncertainty situation regarding the voice recognition and wherein means are provided which in the first step of a retraining routine select a given voice pattern for retraining, in the second step detect the immediately following voice utterance and in the third step correlate the detected voice utterance with the selected given voice pattern and file it as a new voice pattern in the voice recognition system, **characterised in that** the means provided are also designed so that in the first step of a retraining routine the given voice pattern for retraining is selected by the voice recognition system by automatic listing, beginning with the voice pattern having the highest probability.

5. A voice recognition system according to claim 4, **characterised in that** means are provided which in the event of another defined uncertainty situation regarding a currently detected voice utterance, make an initial comparison with the given voice patterns only and then compare the currently detected voice utterance with the voice pattern newly filed in the retraining routine and select it if sufficiently similar.

6. A voice recognition system according to claim 4, **characterised in that** means are provided which immediately use the voice pattern newly stored in the retraining routine, together with the given voice routines, for comparing with a currently detected voice utterance without waiting for a defined uncertainty situation after a first comparison with the given voice patterns only.

## Revendications

1. Procédé de reconnaissance vocale d'échantillons vocaux prédéfinis pour la commande vocale de systèmes de véhicules à moteur, selon lequel une expression vocale détectée par un dispositif d'enregistrement dans un système de reconnaissance vocale est comparée avec les échantillons vocaux prédéfinis, et l'échantillon vocal prédéfini qui coïncide avec la plus grande probabilité à l'expression vocale saisie est sélectionné comme échantillon vocal reconnu, une routine de post-accommodation automatique est rendue possible lors de l'apparition d'une situation d'incertitude définie du point de vue de la reconnaissance vocale du système de reconnaissance vocale et, en cas d'exécution de la routine de post-accommodation, dans un premier temps, on sélectionne un échantillon vocal prédéfini qu'il s'agit de post-accommoder, dans un deuxième temps on détecte l'expression vocale qui suit et, dans un troisième temps on associe, cette expression vocale détectée à l'échantillon vocal prédéfini sélectionné et on la sauvegarde en tant que nouvel échantillon vocal dans le système de reconnaissance vocale,
**caractérisé en ce que**
dans le cas où la routine de post-accommodation est exécutée dans un premier temps, l'échantillon vocal prédéfini devant être post-accommodé est sélectionné par le système de reconnaissance vocale par listage, en commençant par l'échantillon vocal ayant la plus grande probabilité.

2. Procédé selon la revendication 1,
**caractérisé en ce qu'**
en cas de nouvelle apparition d'une situation d'incertitude définie pour une expression vocale en train d'être détectée lors d'une comparaison, celle-ci n'est comparée tout d'abord qu'avec les échantillons vocaux prédéfinis, ensuite avec l'échantillon vocal nouvellement sauvegardé dans la routine de post-accommodation et sélectionnée en cas de similitude suffisante.

3. Procédé selon la revendication 1,
**caractérisé en ce que**
les échantillons vocaux nouvellement sauvegardés dans les routines de post-accommodation sont utilisés immédiatement, avec les échantillons vocaux prédéfinis, en cas de comparaison avec une expression vocale en train d'être détectée sans attendre une situation d'incertitude définie lors d'une première comparaison uniquement avec les échantillons vocaux prédéfinis.

4. Système de reconnaissance vocale pour la reconnaissance vocale d'échantillons vocaux prédéfinis pour la commande vocale de systèmes de véhicules à moteur, dans lequel des moyens comparent une expression vocale détectée avec un dispositif d'enregistrement avec les échantillons vocaux prédéfinis, déterminent une probabilité pour la coïncidence et sélectionnent l'échantillon vocal prédéfini qui coïncide avec la plus grande probabilité avec l'expression vocale détectée, en tant qu'échantillon vocal reconnu, des moyens permettent une routine de post-accommodation automatique en cas d'apparition d'une situation d'incertitude définie du point de vue de la reconnaissance vocale et des moyens sélectionnent, dans un premier temps, un échantillon vocal prédéfini qu'il faut post-accommoder en cas d'exécution de la routine de post-accommodation, détectent dans un deuxième temps l'expression vocale suivante et, dans un troisième temps, associent cette expression vocale détectée à l'échantillon vocal prédéfini sélectionné et la sauvegardent dans le système de reconnaissance vocale en tant que nouvel échantillon vocal,
**caractérisé en ce que**
les moyens prévus sont configurés de manière à ce qu'en cas d'exécution de la routine de post-accommodation, dans un premier temps, l'échantillon vocal prédéfini devant être post-accommodé est sélectionné par le système de reconnaissance vocale par listage, en commençant par l'échantillon vocal ayant la plus grande probabilité.

5. Système de reconnaissance vocale selon la revendication 4,
**caractérisé par**
des moyens qui, en cas de nouvelle apparition d'une situation d'incertitude définie pour une expression vocale en train d'être détectée lors d'une comparaison, ne la comparent tout d'abord qu'avec les échantillons vocaux prédéfinis, ensuite avec l'échantillon vocal nouvellement sauvegardé dans la routine de post-accommodation et la sélectionnent en cas de similitude suffisante.

6. Système de reconnaissance vocale selon la revendication 4,
**caractérisé par**
des moyens qui utilisent immédiatement les échantillons vocaux nouvellement sauvegardés dans les routines de post-accommodation, avec les échantillons vocaux prédéfinis, lors d'une comparaison avec une expression vocale nouvellement détectée sans attendre une situation d'incertitude définie lors d'une première comparaison uniquement avec les échantillons vocaux prédéfinis.
